Europäisches Patentamt

European Patent Office

Office européen des brevets

(11) Publication number: **0 103 449**

**B1**

(12) **EUROPEAN PATENT SPECIFICATION**

(45) Date of publication of patent specification: **09.08.89**

(51) Int. Cl.⁴: **C 10 G 35/09**

(21) Application number: **83305126.1**

(22) Date of filing: **05.09.83**

(54) **Single particle multi-metallic reforming catalyst and process of using same.**

(30) Priority: **13.09.82 US 417761**

(43) Date of publication of application:
**21.03.84 Bulletin 84/12**

(45) Publication of the grant of the patent:
**09.08.89 Bulletin 89/32**

(84) Designated Contracting States:
**BE DE FR GB IT NL**

(56) References cited:
**EP-A-0 036 703**
**FR-A-2 017 701**
**US-A-3 617 520**
**US-A-3 953 368**
**US-A-4 288 348**

(73) Proprietor: **MOBIL OIL CORPORATION**
**150 East 42nd Street**
**New York New York 10017 (US)**

(72) Inventor: **Chester, Arthur Warren**
**517 Country Club Drive**
**Cherry Hill New Jersey 08003 (US)**
Inventor: **Krishnamurthy, Sowmithri**
**1281 Marlkress Road**
**Cherry Hill New Jersey 08003 (US)**
Inventor: **Kresge, Charles Theodore**
**140 Shire Drive**
**Sewell New Jersey 08080 (US)**
Inventor: **McHale, William Depaul**
**32 Monroe Street**
**Swedesboro New Jersey 08085 (US)**

(74) Representative: **Jones, Alan John et al**
**CARPMAELS & RANSFORD 43 Bloomsbury**
**Square**
**London, WC1A 2RA (GB)**

Courier Press, Leamington Spa, England.

## Description

This invention relates to a method for preparing a catalyst composition containing platinum, rhenium and iridium where all three metals are contained on a single refractory support and a reforming process using this catalyst.

The present invention enables the provision of a single particle multi-metallic reforming catalyst comprising a porous refractory oxide support having uniformly distributed throughout from 0.05 to 5 weight percent each of platinum, iridium and rhenium.

The present invention provides a method for preparing a single particle multi-metallic catalyst composite which comprises the steps of contacting a porous refractory oxide support with gaseous carbon dioxide in an amount and for a pressure and time sufficient to substantially saturate the pores of the support with carbon dioxide and thereafter effecting impregnation of the carbon dioxide contacted support with a platinum, rhenium and iridium such that the metals are substantially uniformly distributed throughout the support and calcining the resultant composite.

The present invention also provides a reforming process which comprises contacting a reforming charge stock under reforming conditions with the catalyst composition prepared as described above.

Catalysts intended for use in reforming operations wherein hydrocarbon fractions such as naphthas or gasolines or mixtures thereof are treated to improve the anti-knock characteristics thereof are well known in the petroleum industry and have been the subject of intensive investigation in both the patent and technical literature.

It has heretofore been proposed to employ platinum metal-containing catalysts for promoting reforming. Such catalysts are necessarily characterized by a certain amount of acidity. One type of reforming catalyst which has been used commercially consists of alumina base material having platinum metal impregnated thereon, with the acidity characteristics being contributed by a small amount of halogen incorporated in the catalyst.

In more recent years, multi-metallic reforming catalysts have been the subject of patent and technical literature. These catalysts contain platinum together with one or more additional metals, such as ruthenium, germanium iridium, palladium, rhenium, osmium, rhodium, copper, silver, tin or gold deposited on a refractory support which also contains a specified amount of halogen. Representative of these multi-metallic reforming catalysts are those containing platinum and rhenium or platinum and iridium such as described in U.S. Patent Nos. 2,848,377, 3,415,737 and 3,953,368. The latter patent reports certain advantages when platinum and iridium are present on a refractory support as highly dispersed polymetallic clusters in which the metallic atoms are separated by a distance of about 2.5 to 4.0 Angstroms.

It has also heretofore been known to conduct catalytic reforming utilizing a catalyst consisting essentially of a particularly defined mixture of particles of a porous carrier impregnated with a small amount of platinum and particles of an acidic cracking component. Representative disclosures of such prior art are found in U.S. Patent Nos. 2,854,400, 2,854,403, and 2,854,404. Also, it has been suggested, for example, in German OS 26 27 822 to conduct reforming in the presence of a catalyst constituting a mixture of platinum on one solid catalyst and rhenium on a second solid carrier.

The use of trimetallic catalysts is also known in the reforming art and, in fact, single particle platinum, rhenium, and iridium catalysts on an alumina support are specifically taught in U.S. Patent Nos. 3,578,583, 3,617,520, and 3,487,009.

Recently, there have been advances made in the art of using separate particles containing platinum and rhenium on one support and iridium on another support. Patents of this general type are U.S. Patent No. 4,288,348 as well as U.S. Patent No. 4,264,475. All of the above catalysts, while possessing certain advantages, are nevertheless subject to improvement with regard to the provision of a reforming catalyst which provides a high yield of gasoline of high octane number over an extended period of time.

In accordance with the present invention, reforming of a hydrocarbon charge such as naphtha can be effectively carried out over an extended period of time under conditions of high severity to produce a high yield of gasoline of high octane number when the reforming is conducted in the presence of a single particle, multi-metallic reforming catalyst prepared such that the metals are uniformly distributed throughout the support.

It is to be immediately recognized that reforming is a very complex chemical reaction and there have been many proposals advanced in the art in order to enhance the catalytic properties of the particular agent which is used. Thus, there have been proposals advanced in the art to obtain a uniform distribution of platinum within the pores of a solid support, such as alumina and, in this connection, U.S. Patent Nos. 2,884,382 and 3,818,207 are concerned with various techniques utilizing carbon dioxide for the preparation of reforming catalysts which have a uniform distribution of platinum. Although the advantages of utilizing a uniform distribution of platinum are well known in the art, nevertheless, when dealing with multi-metallic components, there simply is no valid basis for predicting whether uniform distribution would be advantageous in an overall reforming operation, much less whether or not all metals could be uniformly distributed by a particular technique or techniques.

It has also been proposed in EP—A—36703 to prepare multi-metallic reforming catalyst composites comprising a platinum group metal and one or more metals from Groups VIIIA, VIIA and IVB of the Periodic Chart of the Elements on a common support, which comprises contacting the support with gaseous carbon dioxide in an amount and for a period of time sufficient to substantially saturate the support with carbon dioxide, thereafter impregnating the support with the desired metals and calcining the resulting composite. In this document bimetallic catalysts comprising platinum and rhenium are disclosed together with dual particle catalysts comprising platinum and rhenium on one particle and iridium on a separate particulate support.

Thus, for example, previously referred to U.S. Patent No. 3,953,368 points out certain advantages with regard to having polymetallic clusters. In the examples which follow, it will also be shown that techniques which are applicable to some multi-metallic components, i.e. tri-metallic components, are not applicable to bimetallic components with regard to specific reactions desired to be catalyzed, particularly the dehydrocyclization of normal paraffins to aromatics.

It has now been discovered that a single particle supported tri-metallic platinum, iridium, and rhenium metal-containing catalyst exhibiting improved activity and uniform metal distribution throughout the refractory support can be obtained by pretreating the support with gaseous carbon dioxide before impregnation of the support with the desired metals.

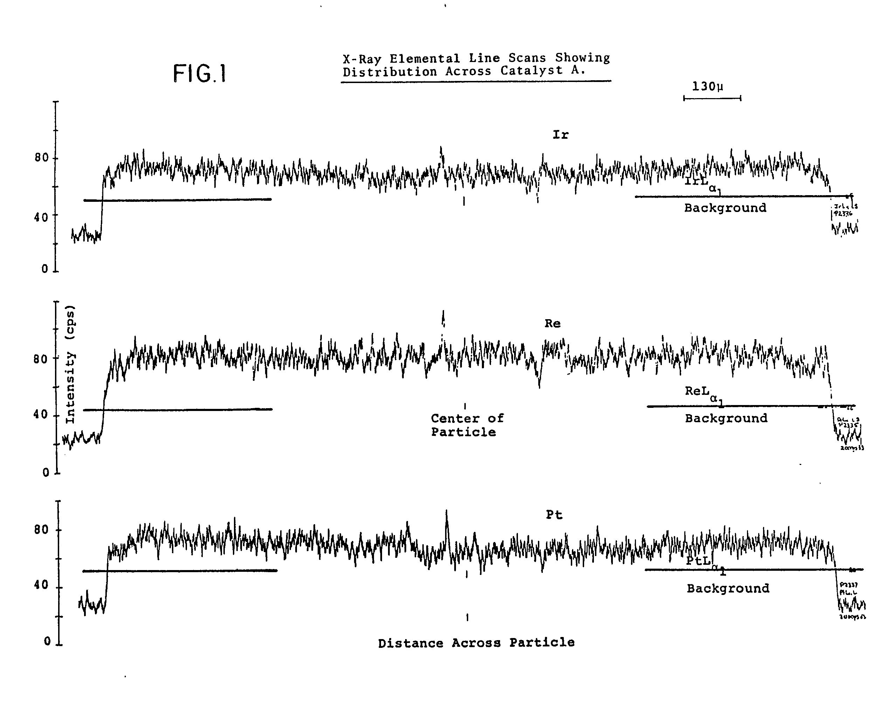

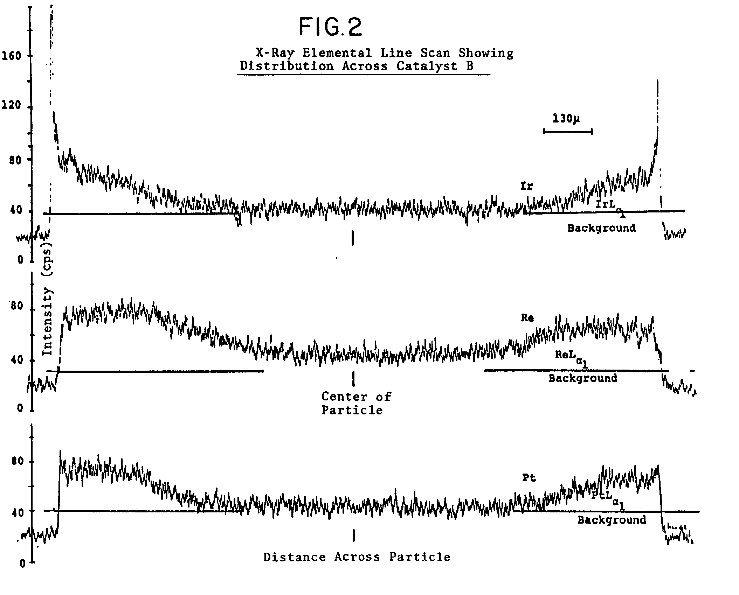

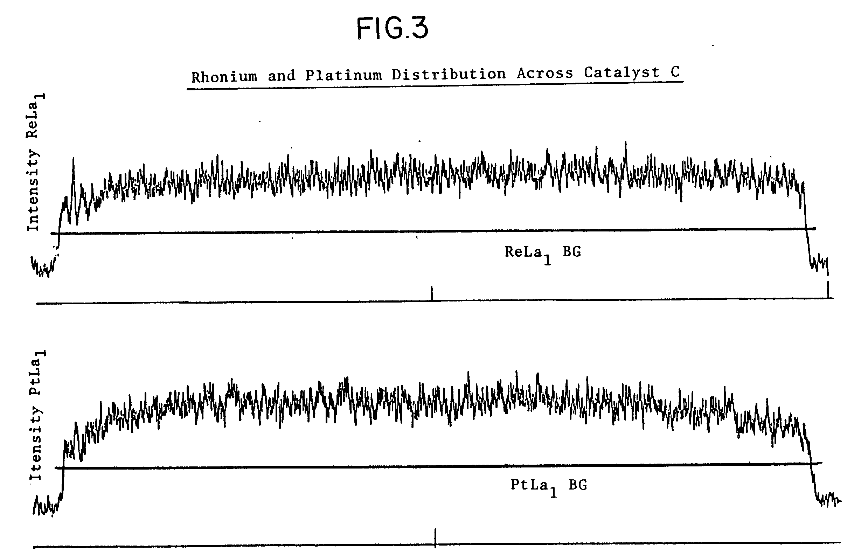

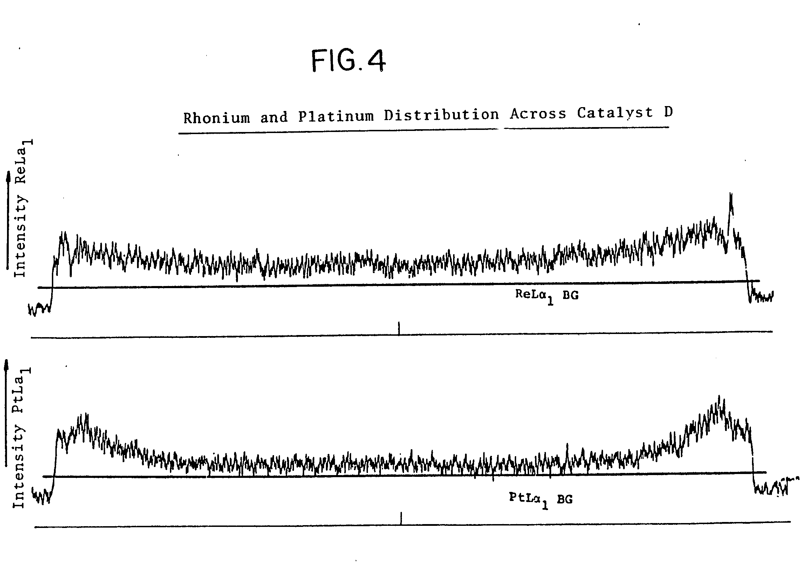

Figures 1 to 4 are plots of L alpha intensity of platinum, rhenium, and iridium and platinum and rhenium catalysts as a function of the distance across the respective catalyst particles. One catalyst contains 0.3 weight percent platinum and 0.3 weight percent rhenium and the other catalyst contained 0.3 weight percent each of platinum, rhenium and iridium. Such alpha intensity is derived by focusing an electron beam on the catalyst samples.

Figure 1 is directed to a plot for a platinum, rhenium, iridium/alumina catalyst subjected to $CO_2$ saturation and Figure 2 is a plot of such catalyst prepared without $CO_2$ saturation.

Figure 3 is specifically directed to such plots for a platinum rhenium/alumina catalyst subjected to $CO_2$ to saturation.

Figure 4 is specifically directed towards such a catalyst which has not been subject to $CO_2$ saturation.

The multi-metallic single particle catalysts prepared according to this invention comprise platinum, rhenium and iridium on an appropriate support. Each of the metals individually can range from 0.05 to 5 percent by weight, particularly from 0.05 to 1.0 percent by weight, based on the total composition. The particularly preferred catalyst contains 0.3 percent by weight of each of platinum, rhenium and iridium.

The refractory support for utilization in the present invention is a porous adsorptive material having a surface area exceeding 20 square meters per gram and preferably greater than 100 square meters per gram. Refractory inorganic oxides are preferred supports, particularly alumina or mixtures thereof with silica. Alumina is particularly preferred and may be used in a large variety of forms including alumina precipitate or gel, alumina monohydrate and sintered alumina. Various forms of alumina either singly or in combination, such as eta, chi, gamma, theta, delta or alpha alumina may be suitably employed as the alumina support. Preferably, the alumina is gamma alumina and/or eta alumina. The above nomenclature used in the present specification and claims with reference to alumina phase designation is that generally employed in the United States and described in *The Aluminum Industry: Aluminum and Its Production* by Edwards, Frary and Jeffries, published by McGraw-Hill (1930). The refractory support, desirably alumina has a preferred particle size of at least 0.01 μm and generally not exceeding about 3000 μm. The alumina may be employed in massive form but generally will be in the form of a powder or in particle form, either irregularly shaped or uniformly shaped as beads, cubes, tablets and extruded pellets. In the preparation of spheroidal alumina gel particles, an alumina hydrosol is prepared by intimate admixture of suitable reactants and the hydrosol is introduced in the form of globules to a water-immiscible medium, the depth and temperature of which is controlled so that the hydrosol globules set for spheroidal particles of hydrogel during passage through the medium. The resulting hydrogel particles are thereafter withdrawn from the forming zone and conducted to suitable washing, drying and/or calcining equipment as described. Alumina, in the form of a precipitate, may be prepared by adding a suitable reagent such as ammonium hydroxide or ammonium carbonate to an aluminum salt such as aluminum chloride, aluminum nitrate and aluminum acetate in an amount to form aluminum hydroxide which, upon drying, is converted to alumina. After the alumina has been formed, it is generally washed to remove soluble impurities. Washing procedures ordinarily involve washing with water, either in combination with filtration or as separate operations. It has been found that filtration of the alumina is improved when the wash water contains a small amount of ammonium hydroxide. The extent of washing will depend to some extent on the nature of the reactants initially employed in preparation of the alumina precipitate.

Halogen may be added to the support, preferably alumina, in a form which will readily react therewith in order to obtain the desired results. One feasible method of adding the halogen is in the form of an acid such as hydrogen fluoride, hydrogen bromide, hydrogen chloride and/or hydrogen iodide. Other suitable sources of halogen include volatile salts such as ammonium fluoride and ammonium chloride. When such salts are used, the ammonium ions will be removed during subsequent heating of the catalyst. Halogen may also be added as fluorine, chlorine, bromine or iodine or by treatment in gaseous hydrogen halide. The halogen, preferably a chlorine or fluorine moiety, may be incorporated into the catalyst at any suitable stage in the catalyst manufacture. Thus, halogen may be added before, after or during incorporation of the metal or metals. It is preferred to introduce halogen during impregnation with the metal or metals after the alumina has undergone carbon dioxide treatment. One method to accomplish this is to use halogen-containing metal compounds such as chloroplatinic acid or chloroiridic acid. Additional amounts of halogen may be incorporated in the catalyst by contacting it with materials such as hydrogen fluoride and hydrogen chloride, either prior to or subsequent to the metal impregnation step. Halogen may also be incorporated by contacting the catalyst with a gaseous stream containing the halogen such as chlorine or hydrogen chloride. One feasible way to halogenate the alumina is by the addition of an alkyl halide such as tertiary butyl chloride during the reforming operation. The amount of halogen introduced into the support is such that the halogen content of the overall catalyst is between 0.1 and 5 weight percent.

It is an essential feature of the present invention that the alumina base be pretreated with gaseous carbon dioxide prior to impregnation with a solution containing the desired metals. The alumina base either with or without halogen is dried to a water content preferably of less than 30 percent by weight. It is particularly preferred that the alumina base, after drying, be calcined before contact thereof with gaseous carbon dioxide. The dried and/or calcined alumina is thereafter, in accordance with the process of this invention, treated with gaseous carbon dioxide. Such treatment is generally effected under room temperature conditions utilizing a carbon dioxide pressure in the range of between about 100 kPa (0 psig) and 450 kPa (50 psig). The alumina is generally treated with carbon dioxide for a period between one minute and 48 hours and more usually between one minute and 3 hours. It is to be noted that the time of gas treatment and the gauge pressures set forth above are not considered critical, it being only necessary that the alumina base be exposed to a gaseous carbon dioxide atmosphere for a sufficient period of time and under sufficient pressure to become substantially saturated. The gas initially contained in the pores of the alumina base, which will ordinarily be air, may be replaced by sweeping the alumina particles with gaseous carbon dioxide for a sufficient period of time to replace substantially all of the air in the pores of the alumina with carbon dioxide. It is generally preferred, however, to subject the porous alumina base to a vacuum, thereby removing the air or other gas contained therein and subsequently to contact the evacuated particles with gaseous carbon dioxide. The alumina, after treatment with carbon dioxide, is thereafter impregnated with a solution of a suitable compound(s) of the desired metals. In one preferred embodiment of the invention, the alumina, after pretreatment, is maintained in an atmosphere of gaseous carbon dioxide during the subsequent impregnation. Desirably, the alumina which has undergone pretreatment with gaseous carbon dioxide should be brought into contact with the impregnating solution containing compound(s) of the desired metals immediately after such pretreatment to insure the optimum results of this invention.

A particularly effective method of impregnating the carbon dioxide treated alumina support comprises the use of an aqueous solution of metal containing acids such as chloroplatinic acid, bromoplatinic acid, chloroiridic acid and perrhenic acid ($HReO_4$). A particularly preferred embodiment of this invention involves the preparation of a tri-metallic catalyst comprising platinum, rhenium and iridium on alumina. In the preparation of such a catalyst, an aqueous solution of chloroplatinic acid, chloroiridic acid and perrhenic acid is comingled with the carbon dioxide-treated alumina particles and the resulting mixture is permitted to stand, preferably with or after suitable agitation, so that thorough mixing is obtained and even distribution of the platinum, iridium, and rhenium solutions throughout the alumina support is attained. This period of contact will generally be in the approximate range of between 10 minutes and 48 hours, and more generally between 10 minutes and 2 hours. Solutions of other compounds which may also be suitably employed for impregnation include platinum tetrachloride, ammonium platinum chloride, trimethyl benzyl ammonium platinum chloride, tetraamineplatinum (II) chloride, ammonium platinum nitrate, dinitrodiamineplatinum (II), ammonium perrhenate, perrhenic acid ($HReO_4$), ammonium perrhenate ($NH_4ReO_4$) and iridium compounds such as the ammonium chloride double salt, tribromide, trichloride, tetrachloride or chloroiridic acid. Iridium amine complexes may also be suitably employed.

The resulting composite of alumina and the metal with the combined halogen is dried at a temperature of from 93°C (200°F) to 260°C (500°F) for a period of time of from 0.5 hours to 24 hours or longer and thereafter the composite is calcined in the presence of an oxygen-containing gas, e.g. air, at a temperature of from 430°C (800°F) to 540°C (1000°F) for a period of time of from 0.5 hour to 12 hours or more. In some instances, the calcination may occur in nitrogen in lieu of air. In addition to calcination, the composite may be exposed in a hydrogen atmosphere to reduce a substantial portion of the metal components to the elemental state. Such reduction is generally conducted at temperatures not in excess of 540°C (1000°F).

Typically the amount of each individual metal component is from 0.05 to 5.0 percent by weight, the remaining weight of the catalyst being support material with some halogen content.

The single particle trimetallic catalysts prepared according to this invention result in enhancement in catalytic activity, particularly dehydrocyclization activity for reasons that are not completely understood but are as a result of the uniform metal distribution.

In a particular embodiment of the method of this invention, alumina beads are pretreated with gaseous carbon dioxide, then, while the beads are mixed by continuous rotation, the beads are impregnated with an aqueous solution containing a compound (or complex or complexes) of the three desired metals followed by drying and calcination. Post impregnation carbon dioxide treatment may be utilized as a precaution.

The catalyst prepared according to the novel method of the instant invention is particularly useful in the reforming of hydrocarbons. Charge stocks undergoing reforming, using the catalyst described herein, are contemplated as those conventionally employed. These include virgin naphtha, cracked naphtha, gasoline, including FCC gasoline, or mixtures thereof boiling within the approximate range of from 20°C (70°F) to 260°C (500°F) and, preferably within the range of from 50°C (120°F) to 235°C (450°F). The charge stock is contacted in the vapor phase with the catalyst at a liquid hourly space velocity of from 0.1 to 10 and preferably from 0.5 to 4. Reaction temperature is within the approximate range of from 370°C (700°F) to 590°C (1100°F) and preferably from 430°C (800°F) to 565°C (1050°F). Hydrogen may be added to the reaction zone at a range corresponding to a mole ratio of hydrogen to hydrocarbon charge of from 0.5 to 20 and preferably from 2 to 12. Reaction pressure is maintained between 450 kPa (50 psig) and 7000 kPa (1000 psig), preferably between 795 kPa (100 psig) and 4935 kPa (700 psig). Since the reforming process produces large quantities of hydrogen, at least a portion thereof may be conveniently employed for the introduction of hydrogen with the feed.

It is contemplated that the resultant catalyst of the method of the instant invention may be employed in any of the conventional types of processing equipment. Thus, the catalyst may be used in the form of pills, pellets, extrudates, spheres, granules, broken fragments or various other shapes dispersed as a fixed bed within a reaction zone. The charge stock may be passed through the catalyst bed as a liquid, vapor or mixed phase in either upward or downward flow. The catalyst may also be used in a form suitable for moving beds. In such instance, the charge stock and catalyst are contacted in a reforming zone wherein the charge stock may be passed in concurrent or countercurrent flow to the catalyst. Alternatively, a suspensoid-type process may be employed in which the catalyst is slurried in the charge stock and the resulting mixture conveyed to the reaction zone. The reforming process is generally carried out in a series of several reactors. Usually, three to five reactors are used. The catalyst prepared according to the method of the invention may be employed in just one of the reactors, e.g. the first reactor or in several reactors or in all reactors. After reaction, the product from any of the above processes is separated from the catalyst by known techniques and conducted to distillation columns where the various desired components are obtained by fractionation.

A particularly preferred embodiment of the process of this invention resides in its use for the reforming of highly paraffinic naphthas with feed sulfur levels up to 15 ppm. For reasons which are not completely understood it has been found that the single particle multi-metallic reforming catalyst of this invention having a uniform distribution of the three metals permits the optimization of the $C_{5+}$ yields from processing such highly paraffinic naphthas, even though the naphtha has significantly high sulfur levels. Thus deliberate addition of sulfur is advantageous. This is in contrast to existing commercial catalysts which lose their activity and yield stability rapidly at feed sulfur levels near 1 ppm.

The following examples illustrate the present invention.

The supports used in the following examples were commercially obtained spheroidal 0.159 cm (1/16 inch) gamma alumina beads. Typical analytical properties of these beads is given below in Table 1. In general, the supports were humidified before each preparation by storing over water in a closed vessel for at least four hours. This humidification step can be combined with the carbon dioxide pretreatment step, if so desired. The humidification step is not essential to achieve the beneficial results afforded by the present invention. The use of humidification, however, depends on the state of hydration of the support.

TABLE 1

Typical analytical properties of $\gamma$-$Al_2O_3$ beads

| | |
|---|---|
| Density, Real, g/cm$^3$ | 2.94 |
| Particle, g/cm$^3$ | 0.76 |
| Pore volume, cm$^3$/g | 0.97 |
| Surface area, m$^2$/g | 195 |
| %SiO$_2$ | 0.35 |
| %Na | 0.02 |
| %Cl | 0.04 |
| Crystallinity (order-disorder) | intermediate |

Example 1

This example will illustrate the preparation of the single particle trimetallic catalyst of this invention.

The catalyst composite contains 0.3 weight percent platinum, 0.3 weight percent rhenium, and 0.3 weight percent iridium on alumina with carbon dioxide presaturation of the alumina support.

A double cone blender was filled with 150 g of humidified $\gamma$-$Al_2O_3$ beads. The blender was attached to a rotary evaporator and was evacuated and backfilled with $CO_2$. The blender was then rotated and, under a partial vacuum, the beads were impregnated with 150 ml of an aqueous solution of $H_2PtCl_6$, $HReO_4$, and $H_2IrCl_6$ containing the equivalent of 0.45 g each of metallic platinum, rhenium and iridium. The impregnated beads were held under a $CO_2$ atmosphere for one hour and then dried for 18 hours in a forced air draft oven at 121.1°C (250°F). The platinum-rhenium-iridium-containing beads were then calcined for one hour at 454.4°C (850°F) in nitrogen.

This is identified as Catalyst A.

Example 2 (comparative)

In this example a composite was prepared containing 0.3 weight percent platinum, 0.3 weight percent rhenium, and 0.3 weight percent iridium on alumina without carbon dioxide pretreatment of the support.

A double cone blender was filled with 100 g of humidified $\gamma$-$Al_2O_3$ beads. The blender was attached to a rotary evaporator and rotated. The beads were impregnated with 50 ml of an aqueous solution of $H_2PtCl_6$, $HReO_4$ and $H_2IrCl_6$ containing the equivalent of 0.3 g each of metallic platinum, rhenium and iridium. The impregnated beads were dried for 18 hours in a forced air oven at 121.1°C (250°F) and calcined for one hour at 454.4°C (850°F) in nitrogen.

This is identified as Catalyst B.

Example 3 (comparative)

In this example a bimetallic composite was prepared containing 0.3 weight percent platinum, and 0.3 weight percent rhenium on alumina with carbon dioxide pretreatment of the support.

A flask filled with 15 g of humidified $Al_2O_3$ beads were evacuated and backfilled with $CO_2$. The beads were impregnated with 13.5 ml of an aqueous solution of $H_2PtCl_6$ and $HReO_4$ containing an equivalent of 0.045 g of metallic platinum and 0.045 g of metallic Re. The impregnation technique was that described in Example 1. The impregnated beads were held under a $CO_2$ atmosphere for one hour.

The beads were then dried at 121.1°C (250°F) and calcined for two hours at 482.2°C (900°F) in air.

This is identified as Catalyst C.

Example 4 (comparative)

In this example a composite was prepared containing 0.3 weight percent platinum and 0.3 weight percent rhenium on alumina without $CO_2$ pretreatment of the support.

Humidified γ-$Al_2O_3$ beads (15 g) were impregnated, dried and calcined identically to that described in Example 3 with the exception that the $CO_2$ treatment was omitted.

This is identified as Catalyst D.

Example 5 (comparative)

A commercially prepared platinum/rhenium reforming catalyst containing 0.3 weight percent platinum and 0.3 weight percent rhenium on extruded gamma alumina was identified as Catalyst E.

Example 6 (comparative)

In this example separate particles of platinum and rhenium on alumina and iridium on alumina were physically mixed together. The catalyst contained 0.3 weight percent platinum, 0.3 weight percent rhenium, and 0.3 weight percent iridium prepared with $CO_2$ pretreatment of the support.

This catalyst was labeled Catalyst F and, as is obvious, is not a single particle catalyst within the scope of this invention.

Example 7 (comparative)

This example describes the preparation of separate particle platinum/rhenium on alumina and iridium on alumina catalysts physically mixed together without $CO_2$ pretreatment of the support. The catalyst contains 0.3 weight percent platinum, 0.3 weight percent rhenium, and 0.3 weight percent iridium based on total alumina.

This catalyst which is not within the scope of the present invention is identified as Catalyst G.

Example 8 (comparative)

In this example a commercially prepared platinum/iridium reforming catalyst comprising 0.3 weight percent platinum, 0.3 weight percent iridium on extruded gamma alumina was identified as Catalyst H.

Examples 9 to 16

The catalysts prepared according to the general procedures of Examples 1 to 8 each underwent a catalyst dehydrogenation/dehydrocyclization screening test using n-hexane and cyclohexane as charge stocks. The conditions for such screening tests were as follows:

| Test conditions: | 0.5 g catalyst |
| | $H_2$ Reduction at 454°C |
| | |
| Dehydrogenation: | Charge stock   cyclohexane |
| | WHSV=3 $Hr^{-1}$ |
| | $H_2$/HC=7 |
| | Temp.=300°C |
| | Time=10 minutes |
| | |
| Dehydrocyclization: | Charge stock   n-hexane |
| | WHSV=3 $Hr^{-1}$ |
| | $H_2$/HC=7 |
| | Temp.=470°C |
| | Time=60 minutes |

6

The screening test was conducted by first reducing the catalyst sample with hydrogen at 454°C. After such reduction, cyclohexane was passed over the catalyst sample at the above-stated conditions for 10 minutes. After this 10 minutes contact, the sample was flushed with hydrogen and the temperature was raised from 300°C to 470°C and then n-hexane was passed over the catalyst sample at the above-stated conditions for 60 minutes.

During the period at which the catalyst was contacted with normal hexane, the methane make and the benzene make were determined. The benzene make is a direct measure of the dehydrocyclization activity of the catalyst and, of course, the methane make determines the practical significance of a catalyst in a reforming process since too high a methane make significantly reduces reformate yield and hydrogen production and can accelerate catalyst aging.

The results obtained are shown in Table 2.

TABLE 2
Catalyst screening test results

| Example | 9 | 10 | 11 | 12 | 13 | 14 | 15 | 16 |
|---|---|---|---|---|---|---|---|---|
| Catalyst | A | B | C | D | E | F | G | H |
| Wt. % Pt | 0.3 | 0.3 | 0.3 | 0.3 | 0.3 | 0.3 | 0.3 | 0.3 |
| Wt. % Re | 0.3 | 0.3 | 0.3 | 0.3 | 0.3 | 0.3 | 0.3 | |
| Wt. % Ir | 0.3 | 0.3 | | | | 0.3 | 0.3 | 0.3 |
| Shell or uniform distribution | U | S | U | S | S | U | S | S |
| $CyC_6$% Conversion | 81.6 | 79.1 | 72.5 | 62.9 | 76.0 | 86.9 | 69.3 | 66.0 |
| $nC_6$% Conversion | 70.3 | 51.2 | 42.0 | 29.6 | 51.9 | 52.9 | 52.4 | 68.5 |
| Benzene yield, % | 12.1 | 10.5 | 7.5 | 7.9 | 5.7 | 8.5 | 9.5 | 6.4 |
| Methane yield, % | 3.0 | 2.8 | 1.2 | 1.3 | 2.4 | 15.9 | 22.9 | 3.0 |

The results obtained in these examples dramatically illustrate the superiority of the novel catalyst composition of this invention, i.e. Catalyst A of Example 9, as well as demonstrate the complete unpredictability of whether or not it is desirable to have uniform distribution of metals in a reforming catalyst. Thus, with regard to the trimetallic component, the difference in results as between Examples 9 and 10 clearly show that having a uniform distribution produced more benzene.

Comparing the results of Examples 11 and 12, i.e. Catalysts C and D, it can be seen that Catalyst D which was prepared without $CO_2$ pretreatment produced more benzene than the catalyst prepared with $CO_2$ pretreatment. Thus, the action of a bimetallic catalyst and a trimetallic catalyst is not predictable with regard to whether or not enhanced dehydrocyclization activity is obtained by having uniform distribution.

Comparing the results of Example 9 with Example 14, it can be seen that a single particle catalyst produced higher yields of benzene than a multi-particle catalyst even though the metal distribution was the same, i.e. uniform. Note that the methane make on Example 14 was very high. With regard to multi-particle catalysts, i.e. Examples 14 and 15, note that the catalyst of Example 14, i.e. uniform distribution, produced less benzene than the catalyst of Example 15 having a shell distribution. Thus, no analogy can be made with regard to desirability of having uniform metal distribution as between single particle and multi-particle catalysts with regard to benzene make.

EP 0 103 449 B1

Examples 17 to 21

The catalysts A, E, F and H above were further tested for reforming using a full range naphtha with the following properties:

| Properties | |
|---|---|
| Gravity, API | 61.7 |
| Specific gravity | 0.7234 |
| Mol. wt. | 106.25 |
| Sulfur, ppm | <0.2 |
| Nitrogen, ppm | <0.2 |
| Chloride, ppm | <1 |
| | |
| Distillation, °C (°F) | |
| IBP | 70.0 (158) |
| 10% vol. | 91.1 (196) |
| 30% | 105.0 (221) |
| 50% | 122.2 (252) |
| 70% | 138.3 (281) |
| 90% | 157.2 (315) |
| EP | 181.1 (358) |
| | |
| Composition, wt. % | |
| Paraffins | 71.8 |
| Naphthenes | 17.4 |
| Aromatics | 10.8 |

Reforming of the above charge was carried out in an adiabatic three reactor system with recycle. Alcohol, organochloride, and sulfur were added to the naphtha as indicated below to simulate exact commercial conditions. The other operating parameters are listed below with the comparisons.

Catalyst A, when compared to Catalyst E, run identically and under the following conditions:

| | |
|---|---|
| Pressure, kPa (psig) | 1723.7 (250) |
| Total recycle ratio | 10.45 |
| WHSV | 1.1 |
| Sulfur addition, ppm | 2.0 |
| Octane, R+O | 98 |

produced the yields as shown below:

| Example | 17 | 18 |
|---|---|---|
| Catalyst | A | E |
| $C_5+$ yield, vol % | 72.4 | 69.7 |
| $H_2$ purity, mol % | 71.5 | 67.2 |
| $C_1$, wt. % | 1.9 | 1.9 |
| $C_2$, wt. % | 4.6 | 5.4 |
| $C_3$, wt. % | 6.7 | 7.8 |
| $C_4$, wt. % | 7.8 | 9.1 |

When Catalyst A is compared to Catalyst F and under the following conditions:

| | |
|---|---|
| Pressure, kPa (psig) | 1379.0 (200) |
| Total recycle ratio | 6 |
| WHSV | 2 |
| Sulfur addition, ppm | 2 |
| Octane, R+O | 98 |

the yields produced after 30 days on stream compare as follows:

8

| Example | 19 | 20 | 21 |
|---|---|---|---|
| Catalyst | A | F | H |
| $C_{5+}$ yield, vol % | 74.8 | 71.3 | 70.6 |
| $H_2$ purity, mol % | 76 | 65 | 64.3 |
| $C_1$, wt. % | 1.6 | 2.9 | 2.6 |
| $C_2$, wt. % | 3.9 | 5.5 | 5.6 |
| $C_3$, wt. % | 5.6 | 6.0 | 6.4 |
| $C_4$, wt. % | 6.9 | 7.6 | 8.5 |

As can be seen from the above data, the catalyst of Example A was far superior to the other catalyst tested.

Examples 22 to 26

The following examples will illustrate a particularly preferred embodiment of this invention residing in the reforming of a highly paraffinic naphtha charge stock at various sulfur levels.

In this example, the feed employed was a full range naphtha as employed in Examples 17 to 21. The experiment was conducted in a manner similar to that of Examples 17 to 21 in that it was carried out in an adiabatic three reactor system with recycle, alcohol, organic chloride, and sulfur was added to the naphtha as indicated below to simulate exact commercial operations and conditions. The other operating parameters will be set forth in the Table which follows. Sulfur was added in the form of untreated naphtha at 2, 5, 10 and 15 ppm level. The operating conditions and yields are shown in the following Table. In all cases the catalyst employed was catalyst A from Example 1.

TABLE
Comparison of trimetallic catalyst yields
at different sulfur levels

| Example | 22 | 23 | 24 | 25 | 26 |
|---|---|---|---|---|---|
| Pressure, kPa (psig) | 1723.7 (250) | ⟶ | | | |
| Total recycle ratio | 10.45 | ⟶ | | | |
| WHSV | 1.44 | ⟶ | | | |
| LHSV | 1.00 | ⟶ | | | |
| R+O | 98 | ⟶ | | | |
| Sulfur, ppm | 0 | 2 | 5 | 10 | 15 |
| $C_{5+}$ yield, vol % | 70.9 | 71.7 | 72.3 | 70.9 | 70.7 |
| $H_2$ purity, mol % | 65.2 | 70.7 | 72.2 | 70.2 | 69.9 |
| $H_2$ prod. SCF/BBL | 694 | 722 | 713 | 698 | 674 |
| $C_1$, wt. % | 3.0 | 2.2 | 1.9 | 1.9 | 1.9 |
| $C_2$, wt. % | 5.3 | 4.8 | 4.7 | 5.0 | 5.1 |
| $C_3$, wt. % | 6.5 | 6.8 | 6.7 | 7.3 | 7.4 |
| $C_4$, wt. % | 7.7 | 8.2 | 8.4 | 8.6 | 8.9 |

From the above table, it can be seen that there is a yield advantage in going from 0 to 2 ppm and on to 5 ppm sulfur. Furthermore, the yield loss between 5 and 15 ppm is around 1.6 volume percent. This is truly an outstanding result with regard to a reforming catalyst at these significantly high sulfur levels.

Examples 27 and 28

These examples serve as comparative examples in that a commercially prepared catalyst comprising 0.3 weight percent platinum and 0.3 weight percent rhenium on alumina was tested for reforming using a full range naphtha whose properties were given in Examples 22 to 26. Reforming was carried out under the conditions of the previous Examples 22 to 26, except that sulfur was added in the form of unpretreated naphtha at 2 ppm level. The operating conditions and the yields are shown in the following table:

TABLE
Comparison of yields at different sulfur levels

| Example | 27 | 28 |
|---|---|---|
| Pressure, kPa (psig) | · 1723.7 (250) ⟶ | |
| Total recycle ratio | 10.45 ⟶ | |
| WHSV | 1.14 ⟶ | |
| LHSV | 1.00 ⟶ | |
| R+O | 98 ⟶ | |
| Sulfur, ppm | 0.0 | 2.0 |
| $C_5+$ yield, vol % | 71.4 | 69.7 |
| $H_2$ purity, mol % | 69.5 | 67.2 |
| $H_2$ prod., SCF/BBL | ⟍ 713 | 648 |
| $C_1$, wt. % | 2.1 · | ⎯ 1.9 |
| $C_2$, wt. % | 4.8 | 5.4 |
| $C_3$, wt. % | 7.1 | 7.8 |
| $C_4$, wt. % | 8.3 | 9.1 |

From the above Table, it can be seen that the addition of 2 ppm of sulfur to the catalyst experienced a loss of 1.7 volume percent in $C_5+$ yield with an attendant loss of hydrogen purity due to increased production of $C_2$—$C_4$ gases.

Thus, an important embodiment of this invention involves the deliberate addition of sulfur to a feed in order to enhance the yield advantage when using the novel catalysts of this invention. As has been demonstrated in Examples 22 to 26, there is a yield advantage in going from 0 ppm sulfur to 5 ppm sulfur. At 10 ppm sulfur, the yield is equal to 0 ppm sulfur, i.e. there is no longer a yield advantage.

Thus, additions of sulfur up to less than 10 ppm improve the yield. This is not true with commercially available trimetallic catalysts (non-uniform distribution of metals) as is shown in Examples 27 and 28.

The sulfur can be added to the feed in any convenient manner such as by the separate addition of sulfur compounds or unpretreated naphtha or the severity of the hydrotreating step which precedes reforming can be reduced to provide the desirable levels of sulfur, i.e. <10 ppm.

**Claims**

1. A method for preparing a single particle multi-metallic catalyst composite which comprises the steps of contacting a porous refractory oxide support with gaseous carbon dioxide in an amount and for a pressure and time sufficient to substantially saturate the pores of the support with carbon dioxide, thereafter effecting impregnation of the carbon dioxide contacted support with platinum, rhenium and iridium, and calcining the resulting composite.

2. The method of Claim 1 wherein the porous refractory oxide support has a surface area exceeding 20 sq. meters per gram.

3. The method of Claim 1 wherein the porous refractory oxide support has a surface area exceeding 100 sq. meters per gram.

4. The method of any one of Claims 1 to 3 wherein the porous refractory oxide support is alumina.

5. The method of any one of Claims 1 to 4 wherein the platinum, rhenium, and iridium are each present in amounts ranging from 0.05 to 5 percent by weight based on total catalyst composition.

6. The method of Claim 5 wherein the platinum, rhenium and iridium are each present in amounts ranging from 0.05 to 1.0 percent by weight.

7. The method of Claim 6 wherein the platinum, rhenium and iridium are each present in an amount equal to about 0.3 percent by weight based on total catalyst.

8. A reforming process which comprises contacting a reforming charge stock under reforming conditions with the catalyst composite prepared by the method of any one of Claims 1 to 7.

9. The reforming process of Claim 8 wherein the reforming charge stock is a highly paraffinic naphtha containing up to 15 ppm of sulfur.

10. The process of Claim 9 wherein sulfur is deliberately added to the reforming charge stock in order to enhance the $C_{5+}$ yield.

## Patentansprüche

1. Verfahren zur Herstellung einer multimetallischen Einzelteilchen - Katalysatorzusammensetzung, welche die Schritte des Kontakts eines porösen, feuerfesten Oxidträgers mit gasförmigem Kohlendioxid in einer Menge und bei einem Druck und einer Zeit, die ausreichend sind, um die Poren des Trägers im wesentlichen mit Kohlendioxid zu sättigen, der anschließenden Durchführung der Imprägnierung des mit Kohlendioxid in Kontakt gebrachten Trägers mit Platin, Rhenium und Iridium und der Kalzinierung der resultierenden Zusammensetzung umfaßt.

2. Verfahren nach Anspruch 1, worin der poröse, feuerfeste Oxidträger eine spezifische Oberfläche aufweist, die größer als 20 m²/g ist.

3. Verfahren nach Anspruch 1, worin der poröse, feuerfeste Oxidträger eine spezifische Oberfläche aufweist, die größer als 100 m²/g ist.

4. Verfahren nach einem der Ansprüche 1 bis 3, worin der poröse, feuerfeste Oxidträger Aluminiumoxid ist.

5. Verfahren nach einem der Ansprüche 1 bis 4, worin Platin, Rhenium und Iridium, bezogen auf die gesamte Katalysatorzusammensetzung jeweils in einer Menge im Bereich von 0,05 bis 5 Gew.-% vorhanden sind.

6. Verfahren nach Anspruch 5, worin Platin, Rhenium und Iridium jeweils in einer Menge im Bereich von 0,05 bis 1,0 Gew.-% vorhanden sind.

7. Verfahren nach Anspruch 6, worin Platin, Rhenium und Iridium bezogen auf den gesamten Katalysator jeweils in einer Menge von etwa 0,3 Gew.-% vorhanden sind.

8. Reformierungsverfahren, das den Kontakt eines Reformierungs - Einsatzmaterials unter Reformierungsbedingungen mit der Katalysatorzusammensetzung umfaßt, die nach dem Verfahren nach einem der Ansprüche 1 bis 7 hergestellt wurde.

9. Reformierungsverfahren nach Anspruch 8, worin das Reformierungs - Einsatzmaterial ein stark paraffinisches Rohbenzin ist, das bis zu 15 ppm Schwefel enthält.

10. Verfahren nach Anspruch 9, worin der Schwefel dem Reformierungs - Einsatzmaterial langsam zugegeben wird, um die $C_5$-Ausbeute zu steigern.

## Revendications

1. Un procédé de préparation d'un matériau catalytique composite multimétallique sur support unique qui comprend les étapes de mise en contact d'un support d'oxyde réfractaire poreux avec du dioxyde de carbone gazeux en quantité et à une pression et pendant une durée suffisantes pour saturer substantiellement les pores du support en dioxyde de carbone, puis imprégnation du support mis au contact de dioxyde de carbone par du platine, du rhénium et de l'iridium et de calcination du matériau composite obtenu.

2. Le procédé selon la revendication 1, dans lequel le support d'oxyde réfractaire poreux présente une surface spécifique supérieure à 20 m³/g.

3. Le procédé selon la revendication 1, dans lequel le support d'oxyde réfractaire poreux présente une surface spécifique dépassant 100 m²/g.

4. Le procédé selon l'une quelconque des revendications 1 à 3, dans lequel le support d'oxyde réfractaire poreux est l'alumine.

5. Le procédé selon l'une quelconque des revendications 1 à 4, dans lequel le platine, le rhénium et l'iridium sont présents chacun en quantité comprise entre 0,05 et 5% en poids par rapport au poids total de la composition de catalyseur.

6. Le procédé selon la revendication 5, dans lequel le platine, le rhénium et l'iridium sont présents chacun en quantité comprise entre 0,05 et 1,0% en poids.

7. Le procédé selon la revendication 6, dans lequel le platine, le rhénium et l'iridium sont présents chacun en quantité égale à environ 0,3% en poids par rapport au poids total du catalyseur.

8. Un procédé de réformage qui consiste à mettre une charge de réformage dans des conditions de réformage au contact du composite de catalyseur préparé par le procédé selon l'une quelconque des revendications 1 à 7.

9. Le procédé de réformage selon la revendication 8, dans lequel le charge de base de réformage est un naphta hautement paraffinique contenant jusqu'à 15 ppm de soufre.

10. Le procédé selon la revendication 9, dans lequel on ajoute délibérément du soufre à la charge de base de réformage en vue d'améliorer le rendement en $C_{5+}$.

FIG.1

X-Ray Elemental Line Scans Showing
Distribution Across Catalyst A.

## FIG.2

X-Ray Elemental Line Scan Showing
Distribution Across Catalyst B

# FIG.3

Rhonium and Platinum Distribution Across Catalyst C

ReLa$_1$ BG

PtLa$_1$ BG

EP 0 103 449 B1

# FIG.4

Rhonium and Platinum Distribution Across Catalyst D

EP 0 103 449 B1